# FASCICULE DE BREVET EUROPEEN

(11) **EP 3 401 073 B1**
(45) Date de publication et mention de la délivrance du brevet: **21.12.2022**
(21) Numéro de dépôt: 18171955.0
(22) Date de dépôt: 11.05.2018
(51) Int. Cl.: B29C 44/04, B29C 44/12, B29C 44/14, B29L 31/58, B60N 2/00, B29K 75/00

(54) **PROCÉDÉ DE RÉALISATION D'UNE MATELASSURE DE SIÈGE DE VÉHICULE AUTOMOBILE, MATELASSURE ET SIÈGE DE VEHICULE AUTOMOBILE**
HERSTELLUNGSVERFAHREN EINER POLSTERUNG EINES KRAFTFAHRZEUGSITZES, POLSTERUNG UND KRAFTFAHRZEUGSITZES
METHOD FOR MANUFACTURING A CUSHION OF A MOTOR VEHICLE SEAT, CUSHION AND MOTOR VEHICLE SEAT

(30) Priorité: 11.05.2017 FR 1754125
(43) Date de publication de la demande: 14.11.2018
(73) Titulaire: TESCA France, 75008 Paris (FR)
(72) Inventeur: GEORGES, Laurent, 75008 PARIS (FR)
(74) Mandataire: Sayettat, Julien Christian

(56) Documents cités:
- EP-A2- 0 819 510
- EP-A2- 1 179 403
- EP-A2- 1 772 309
- EP-B1- 0 819 510
- JP-A- S 565 743
- JP-A- S58 112 715

## Description

L'invention concerne un procédé de réalisation d'une matelassure de siège de véhicule automobile, une matelassure ainsi obtenue et un siège comprenant une telle matelassure.

Il est connu, notamment du document EP-1 772 309, de mettre en oeuvre un procédé de réalisation d'une matelassure de siège de véhicule automobile, ledit procédé comprenant les étapes suivantes :
- prévoir une coiffe souple de revêtement,
- prévoir un moule comprenant un premier et un deuxième sous-ensemble actionnables en fermeture de manière à définir une cavité de moulage, ledit moule présentant les caractéristiques suivantes :
   o ledit premier sous-ensemble comprend un premier et un deuxième élément définissant en partie la paroi de ladite cavité,
   o lesdits éléments peuvent être écartées l'un de l'autre depuis une configuration rapprochée, dans laquelle ils sont séparés l'un de l'autre par une fente, permettant un pincement de ladite coiffe, vers une configuration écartée, dans laquelle ils sont séparés l'un de l'autre par ladite fente élargie, permettant un passage de ladite coiffe,
   o ledit deuxième élément est pourvu d'une lame s'étendant le long de ladite fente et saillant dans ladite cavité de manière à la compartimenter partiellement,
- lesdits éléments étant en configuration écartée, faire passer ladite coiffe à travers ladite fente élargie, de sorte que ladite coiffe présente une zone médiane, disposée dans ladite cavité en regard dudit premier élément, et une zone latérale saillant de ladite cavité,
- actionner lesdits éléments vers leur configuration rapprochée de manière à pincer ladite coiffe entre lesdites zones,
- injecter un mélange précurseur de mousse de polyuréthanne élastiquement compressible sur ladite zone médiane, de manière à former un bloc de rembourrage par expansion de ladite mousse dans ladite cavité,
- déplacer lesdites parties en configuration écartée et démouler ladite matelassure obtenue, ladite matelassure présentant ladite zone médiane surmoulée par ledit bloc et ladite zone latérale non surmoulée par ledit bloc.

On connait également des procédés tels que décrits ci-dessus, qui prévoient notamment d'injecter dans la cavité du moule un premier mélange précurseur de mousse de polyuréthanne élastiquement compressible sur la zone médiane de la coiffe et un deuxième mélange précurseur de mousse de polyuréthanne élastiquement compressible sur la partie de paroi de cavité définie par le deuxième élément du premier sous-ensemble du moule, ledit premier mélange conduisant à une mousse de moindre résistance à la compression que ledit deuxième mélange.

On précise au préalable que, dans toute cette description, la résistance à la compression de la mousse peut par exemple être exprimée par la caractéristique de contrainte-déformation relative en compression, définie par la méthode décrite dans la norme ISO 3386-1 :1986.

Avec un tel agencement, du fait de la non cohésion entre la mousse du bloc et la zone latérale de la coiffe, on limite le risque de déchirure de ladite mousse en partie latérale de la matelassure du fait des entrées/sorties des passagers qui réalisent un pliage répété du bloc dans un sens et dans l'autre.

En outre, on obtient une matelassure présentant latéralement une résistance à la compression accentuée, ce qui permet un bon maintien latéral de l'occupant du siège.

La présence de la lame sus décrite permet d'obtenir une frontière nette entre les mousses de différentes résistance à la compression, lesdites mousses en cours d'expansion restant confinées de part et d'autre de ladite lame et ne venant en contact l'une contre l'autre qu'après un certain taux d'expansion, où elles ont acquis un état semi-solidifié, ce qui permet d'éviter la création d'une zone diffuse à l'interface entre lesdites mousses.

Cependant, un tel agencement ne donne pas entière satisfaction quant à la robustesse de la matelassure.

En effet, la tranchée définie par la lame dans le bloc une fois moulé induit une fragilité dans la matelassure face à des pliages répétés dans un sens et dans l'autre, ladite tranchée formant amorce de déchirure dudit bloc.

L'invention a pour but de pallier cet inconvénient.

A cet effet, et selon un premier aspect, l'invention propose un procédé de réalisation d'une matelassure de siège de véhicule automobile, ledit procédé comprenant les étapes suivantes :
- prévoir une coiffe souple de revêtement,
- prévoir un moule comprenant un premier et un deuxième sous-ensemble actionnables en fermeture de manière à définir une cavité de moulage, ledit moule présentant les caractéristiques suivantes :
   o ledit premier sous-ensemble comprend un premier et un deuxième élément définissant en partie la paroi de ladite cavité,
   o lesdits éléments peuvent être écartées l'un de l'autre depuis une configuration rapprochée, dans laquelle ils sont séparés l'un de l'autre par une fente, permettant un pincement de ladite coiffe, vers une configuration écartée, dans laquelle ils sont séparés l'un de l'autre par ladite fente élargie, permettant un passage de ladite coiffe,
   o ledit deuxième élément est pourvu d'une lame s'étendant le long de ladite fente et saillant dans ladite cavité de manière à la compartimenter partiellement,
- lesdits éléments étant en configuration écartée, faire passer ladite coiffe à travers ladite fente élargie, de sorte que ladite coiffe présente une zone médiane, disposée dans ladite cavité en regard dudit premier élément, et une zone latérale saillant de ladite cavité,
- actionner lesdits éléments vers leur configuration rapprochée de manière à pincer ladite coiffe entre lesdites zones,
- injecter un premier mélange précurseur de mousse de polyuréthanne élastiquement compressible sur ladite zone médiane et un deuxième mélange précurseur de mousse de polyuréthanne élastiquement compressible sur la partie de paroi de cavité définie par ledit deuxième élément, ledit premier mélange conduisant à une mousse de moindre résistance à la compression que ledit deuxième mélange, de manière à former un bloc de rembourrage par expansion desdites mousses dans ladite cavité,
- déplacer lesdites parties en configuration écartée et démouler ladite matelassure obtenue, ladite matelassure présentant ladite zone médiane surmoulée par ledit bloc et ladite zone latérale non surmoulée par ledit bloc,
ledit procédé présentant en outre la caractéristique que, préalablement à l'injection desdits mélanges, ladite lame est entourée par une bande souple de renfort destinée à être surmoulée par ledit bloc, afin de renforcer ledit bloc face au risque de déchirure dans la tranchée définie par ladite lame dans ledit bloc une fois moulé.

Selon d'autres aspects, l'invention propose une matelassure ainsi obtenue et un siège comprenant une telle matelassure.

D'autres particularités et avantages de l'invention apparaîtront dans la description qui suit, faite en référence aux figures jointes, dans lesquelles :
- la figure 1 est une vue schématique en coupe partielle d'une matelassure en cours de fabrication, selon un premier mode de réalisation, le bloc de rembourrage étant en fin d'expansion.
- la figure 2 est analogue à la figure 1, en vue de détail, selon un deuxième mode de réalisation.

En référence aux figures, on décrit un procédé de réalisation d'une matelassure 1 de siège de véhicule automobile, ledit procédé comprenant les étapes suivantes :
- prévoir une coiffe souple de revêtement 2,
- prévoir un moule comprenant un premier et un deuxième 4 sous-ensemble actionnables en fermeture de manière à définir une cavité 5 de moulage, ledit moule présentant les caractéristiques suivantes :
   ∘ ledit premier sous-ensemble comprend un premier 6 et un deuxième 7 élément définissant en partie la paroi de ladite cavité,
   ∘ lesdits éléments peuvent être écartées l'un de l'autre depuis une configuration rapprochée, dans laquelle ils sont séparés l'un de l'autre par une fente 8, permettant un pincement de ladite coiffe, vers une configuration écartée, dans laquelle ils sont séparés l'un de l'autre par ladite fente élargie, permettant un passage de ladite coiffe,
   ∘ ledit deuxième élément est pourvu d'une lame 9 s'étendant le long de ladite fente et saillant dans ladite cavité de manière à la compartimenter partiellement,
- lesdits éléments étant en configuration écartée, faire passer ladite coiffe à travers ladite fente élargie, de sorte que ladite coiffe présente une zone médiane 10, disposée dans ladite cavité en regard dudit premier élément, et une zone latérale 11 saillant de ladite cavité,
- actionner lesdits éléments vers leur configuration rapprochée de manière à pincer ladite coiffe entre lesdites zones,
- injecter un premier mélange précurseur de mousse 12 de polyuréthanne élastiquement compressible sur ladite zone médiane et un deuxième mélange précurseur de mousse 13 de polyuréthanne élastiquement compressible sur la partie de paroi de cavité définie par ledit deuxième élément, ledit premier mélange conduisant à une mousse de moindre résistance à la compression que ledit deuxième mélange, de manière à former un bloc de rembourrage 14 par expansion desdites mousses dans ladite cavité,
- déplacer lesdites parties en configuration écartée et démouler ladite matelassure obtenue, ladite matelassure présentant ladite zone médiane surmoulée par ledit bloc et ladite zone latérale non surmoulée par ledit bloc,
ledit procédé présentant en outre la caractéristique que, préalablement à l'injection desdits mélanges, ladite lame est entourée par une bande 15 souple de renfort destinée à être surmoulée par ledit bloc, afin de renforcer ledit bloc face au risque de déchirure dans la tranchée 16 définie par ladite lame dans ledit bloc une fois moulé.

Selon une réalisation, les mélanges précurseurs de mousses 12,13 sont injectés de manière sensiblement simultanée.

Selon une réalisation, la lame 9 est en saillie dans la cavité 5 selon une cote comprise entre 20 et 50 mm.

Selon une réalisation, la bande 15 est à base de matériau fibreux poreux à la mousse, étant notamment à base de non tissé.

Selon une réalisation, la bande 15 est temporairement maintenue sur la lame 9 par un adhésif.

Selon une réalisation, le revêtement 2 comprend, de façon non représentée, une couche de matériau de revêtement - par exemple en tissu ou en cuir - et une sous-couche à base de mousse élastiquement compressible.

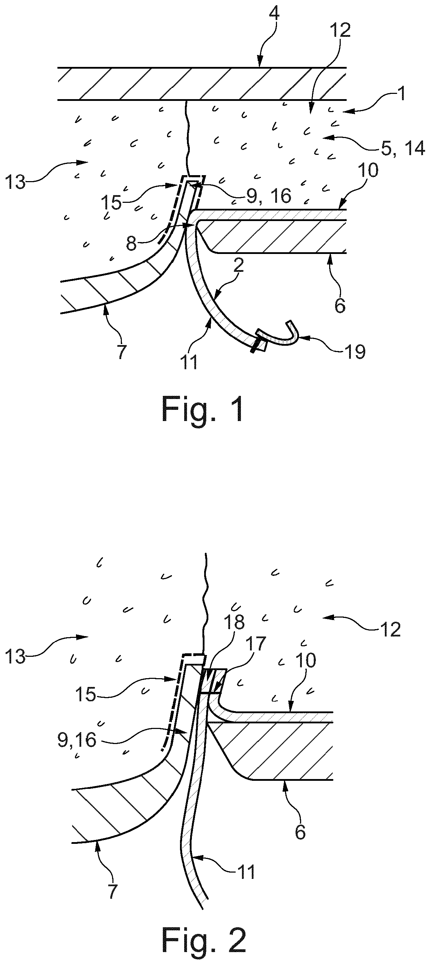

Selon le mode de réalisation représenté en figure 1, le revêtement 2 s'étend sans discontinuité entre la zone médiane 10 et la zone latérale 11 de coiffe.

Selon le mode de réalisation représenté en figure 2, la zone médiane 10 et la zone latérale 11 de coiffe sont reliées entre elles par une couture 17 définissant un talon 18 tourné vers l'intérieur de ladite coiffe, ledit talon prenant appui sur la lame 9 par une de ses faces une fois réalisé le pincement de ladite coiffe.

Selon une variante non représentée, applicable à tous les modes de réalisation décrits, le procédé peut comprendre une étape supplémentaire, réalisée entre le pincement de la coiffe et l'injection des mélanges précurseurs de mousses 12,13, de mise en place d'un film thermoplastique étanche en regard de la zone médiane 10 et de la fente 8, ledit film étant agencé pour se dégrader au contact desdites mousses en cours d'expansion, de manière à permettre un surmoulage de ladite zone médiane par le bloc 14 tout en empêchant sensiblement la pénétration de mousse dans l'épaisseur du revêtement 2 et les fuites de mousse au niveau de ladite fente.

Selon une réalisation, le film est à base de polyuréthanne.

Selon une réalisation, le point de fusion du film est compris entre 40 et 60°C.

Selon une réalisation, l'indice de fluidité en masse du film, mesuré selon la norme NF T 51-016 à 190°C avec un rhéomètre capillaire à écoulement forcé dont le piston est chargé avec une masse de 2,160 kg, est supérieur à 15 g/10 min.

Selon une réalisation, l'indice de fluidité en masse du film, mesuré selon la norme NF T 51-016 à 190°C avec un rhéomètre capillaire à écoulement forcé dont le piston est chargé avec une masse de 2,160 kg, est inférieur à 50 g/10 min, étant notamment égal à 25±3 g/10 min.

Selon une réalisation, le film présente une épaisseur de 15±3 microns, et notamment une épaisseur de 15±1 microns.

Selon une réalisation, le film présente en analyse calorimétrie différentielle à balayage (DSC), réalisée selon la norme ISO 11357, un pic de fusion situé à 49±2°C.

On décrit à présent une matelassure 1 réalisée par le procédé sus décrit, ladite matelassure comprenant :
- un bloc de rembourrage 14 à base de mousse élastiquement compressible,
- une coiffe de revêtement 2 dudit bloc, ladite coiffe présentant une zone médiane 10 surmoulée par ledit bloc et une zone latérale 11 non surmoulée par ledit bloc, la mousse 12 surmoulant ladite zone médiane présentant une résistance à la compression moindre que celle de la mousse 13 s'étendant en regard de ladite zone latérale, ledit bloc
présentant une tranchée 16 disposée à l'interface entre lesdites mousses, ladite matelassure comprenant en outre une bande 15 souple de renfort, notamment à base de non tissé, surmoulée par ledit bloc dans ladite tranchée.

On décrit enfin un siège de véhicule automobile, non représenté, comprenant une telle matelassure 1, ladite matelassure étant montée sur une armature dudit siège, la zone latérale 11 de coiffe étant pourvue de moyens d'accrochage périphériques 19 à ladite armature de manière à être tendue contre le bloc de rembourrage 14.

## Revendications

1. Procédé de réalisation d'une matelassure (1) de siège de véhicule automobile, ledit procédé comprenant les étapes suivantes :
• prévoir une coiffe souple de revêtement (2),
• prévoir un moule comprenant un premier et un deuxième (4) sousensemble actionnables en fermeture de manière à définir une cavité de moulage (5), ledit moule présentant les caractéristiques suivantes :
o ledit premier sous-ensemble comprend un premier (6) et un deuxième (7) élément définissant en partie la paroi de ladite cavité,
∘ lesdits éléments peuvent être écartées l'un de l'autre depuis une configuration rapprochée, dans laquelle ils sont séparés l'un de l'autre par une fente (8), permettant un pincement de ladite coiffe, vers une configuration écartée, dans laquelle ils sont séparés l'un de l'autre par ladite fente élargie, permettant un passage de ladite coiffe,
∘ ledit deuxième élément est pourvu d'une lame (9) s'étendant le long de ladite fente et saillant dans ladite cavité de manière à la compartimenter partiellement,
• lesdits éléments étant en configuration écartée, faire passer ladite coiffe à travers ladite fente élargie, de sorte que ladite coiffe présente une zone médiane (10), disposée dans ladite cavité en regard dudit premier élément, et une zone latérale (11) saillant de ladite cavité,
• actionner lesdits éléments vers leur configuration rapprochée de manière à pincer ladite coiffe entre lesdites zones,
• injecter un premier mélange précurseur de mousse (12) de polyuréthanne élastiquement compressible sur ladite zone médiane et un deuxième mélange précurseur de mousse (13) de polyuréthanne élastiquement compressible sur la partie de paroi de cavité définie par ledit deuxième élément, ledit premier mélange conduisant à une mousse de moindre résistance à la compression que ledit deuxième mélange, de manière à former un bloc de rembourrage (14) par expansion desdites mousses dans ladite cavité,
• déplacer lesdites parties en configuration écartée et démouler ladite matelassure obtenue, ladite matelassure présentant ladite zone médiane surmoulée par ledit bloc et ladite zone latérale non surmoulée par ledit bloc,
ledit procédé étant **caractérisé en ce que**, préalablement à l'injection desdits mélanges, ladite lame est entourée par une bande (15) souple de renfort destinée à être surmoulée par ledit bloc, afin de renforcer ledit bloc face au risque de déchirure dans une tranchée (16) définie par ladite lame dans ledit bloc une fois moulé.

2. Procédé selon la revendication 1, **caractérisé en ce que** la lame (9) est en saillie dans la cavité (5) selon une cote comprise entre 20 et 50 mm.

3. Procédé selon l'une des revendications 1 ou 2, **caractérisé en ce que** la bande (15) est à base de matériau fibreux poreux à la mousse, étant notamment à base de non tissé.

4. Procédé selon l'une quelconque des revendications 1 à 3, **caractérisé en ce que** le revêtement (2) s'étend sans discontinuité entre la zone médiane (10) et la zone latérale (11) de coiffe.

5. Procédé selon l'une quelconque des revendications 1 à 3, **caractérisé en ce que** la zone médiane (10) et la zone latérale (11) de coiffe sont reliées entre elles par une couture (17) définissant un talon (18) tourné vers l'intérieur de ladite coiffe, ledit talon prenant appui sur la lame (9) par une de ses faces une fois réalisé le pincement de ladite coiffe.

6. Procédé selon l'une quelconque des revendications 1 à 5, **caractérisé en ce qu'**il comprend une étape supplémentaire, réalisée entre le pincement de la coiffe et l'injection des mélanges précurseurs de mousses (12,13), de mise en place d'un film thermoplastique étanche en regard de la zone médiane (10) et de la fente (8), ledit film étant agencé pour se dégrader au contact desdites mousses en cours d'expansion, de manière à permettre un surmoulage de ladite zone médiane par le bloc (14) tout en empêchant sensiblement la pénétration de mousse dans l'épaisseur du revêtement (2) et les fuites de mousse au niveau de ladite fente.

7. Matelassure (1) réalisée par un procédé selon l'une quelconque des revendications 1 à 6, ledit procédé comprenant les étapes suivantes :
• prévoir une coiffe souple de revêtement (2),
• prévoir un moule comprenant un premier et un deuxième (4) sous-ensemble actionnables en fermeture de manière à définir une cavité de moulage (5), ledit moule présentant les caractéristiques suivantes :
∘ ledit premier sous-ensemble comprend un premier (6) et un deuxième (7) élément définissant en partie la paroi de ladite cavité,
∘ lesdits éléments peuvent être écartées l'un de l'autre depuis une configuration rapprochée, dans laquelle ils sont séparés l'un de l'autre par une fente (8), permettant un pincement de ladite coiffe, vers une configuration écartée, dans laquelle ils sont séparés l'un de l'autre par ladite fente élargie, permettant un passage de ladite coiffe,
∘ ledit deuxième élément est pourvu d'une lame (9) s'étendant le long de ladite fente et saillant dans ladite cavité de manière à la compartimenter partiellement,
• lesdits éléments étant en configuration écartée, faire passer ladite coiffe à travers ladite fente élargie, de sorte que ladite coiffe présente une zone médiane (10), disposée dans ladite cavité en regard dudit premier élément, et une zone latérale (11) saillant de ladite cavité,
• actionner lesdits éléments vers leur configuration rapprochée de manière à pincer ladite coiffe entre lesdites zones,
• injecter un premier mélange précurseur de mousse (12) de polyuréthanne élastiquement compressible sur ladite zone médiane et un deuxième mélange précurseur de mousse (13) de polyuréthanne élastiquement compressible sur la partie de paroi de cavité définie par ledit deuxième élément, ledit premier mélange conduisant à une mousse de moindre résistance à la compression que ledit deuxième mélange, de manière à former un bloc de rembourrage (14) par expansion desdites mousses dans ladite cavité,
• déplacer lesdites parties en configuration écartée et démouler ladite matelassure obtenue, ladite matelassure présentant ladite zone médiane surmoulée par ledit bloc et ladite zone latérale non surmoulée par ledit bloc,
ladite matelassure comprenant :
• un bloc de rembourrage (14) à base de mousse élastiquement compressible,
• une coiffe de revêtement (2) dudit bloc, ladite coiffe présentant la zone médiane (10) et la zone latérale (11), la mousse (12) surmoulant ladite zone médiane présentant une résistance à la compression moindre que celle de la mousse (13) s'étendant en regard de ladite zone latérale, ledit bloc présentant une tranchée (16) disposée à l'interface entre lesdites mousses,
• une bande (15) souple de renfort, notamment à base de non tissé, surmoulée par ledit bloc dans ladite tranchée,
ladite matelassure étant **caractérisée en ce que** ladite zone médiane est surmoulée par ledit bloc et ladite zone latérale est non surmoulée par ledit bloc, et **en ce que** préalablement à l'injection desdits mélanges, ladite lame est entourée par une bande (15) souple de renfort destinée à être surmoulée par ledit bloc, afin de renforcer ledit bloc face au risque de déchirure dans la tranchée (16) définie par ladite lame dans ledit bloc une fois moulé.

8. Siège de véhicule automobile comprenant une matelassure (1) selon la revendication 7, ladite matelassure étant montée sur une armature dudit siège, la zone latérale (11) de coiffe étant pourvue de moyens d'accrochage périphériques (19) à ladite armature de manière à être tendue contre le bloc de rembourrage (14).

## Patentansprüche

1. Verfahren zur Herstellung einer Polsterung (1) eines Kraftfahrzeugsitzes, wobei das Verfahren die folgenden Schritte umfasst:
• Vorsehen eines flexiblen Verkleidungsüberzugs (2),
• Vorsehen einer Form, die eine erste und eine zweite (4) Unterbaugruppe umfasst, die zum Verschließen betätigbar sind, um einen Formhohlraum (5) zu definieren, wobei die Form die folgenden Eigenschaften aufweist:
o die erste Unterbaugruppe umfasst ein erstes (6) und ein zweites (7) Element, die teilweise die Wand des Hohlraumes definieren,
o die Elemente können aus einer angenäherten Konfiguration heraus, in der sie durch einen Spalt (8) voneinander getrennt sind, der ein Einklemmen des Überzugs ermöglicht, in eine entfernte Konfiguration voneinander entfernt werden, in der sie durch den verbreiterten Spalt voneinander getrennt sind, der ein Durchführen des Überzugs ermöglicht,
o das zweite Element ist mit einer Lamelle (9) versehen, die sich entlang des Spaltes erstreckt, und derart in den Hohlraum hervorsteht, um diesen teilweise zu unterteilen,
• wenn die Elemente in der entfernten Konfiguration sind, Durchführen des Überzugs durch den verbreiterten Spalt, sodass der Überzug einen mittleren Bereich (10), der in dem Hohlraum auf Höhe des ersten Elements angeordnet ist, und einen seitlichen Bereich (11) aufweist, der aus dem Hohlraum hervorsteht,
• Betätigen der Elemente in deren angenäherte Konfiguration, um den Überzug zwischen den Bereichen einzuklemmen,
• Injizieren eines ersten Schaumstoff-Vorläufergemisches (12) aus elastisch verdichtbarem Polyurethan in den mittleren Bereich, und eines zweiten Schaumstoff-Vorläufergemisches (13) aus elastisch verdichtbarem Polyurethan in den Hohlraumwandteil, der von dem zweiten Element definiert wird, wobei das erste Gemisch zu einem Schaumstoff mit geringerem Verdichtungswiderstand fuhrt, als das zweite Gemisch, um einen Füllmaterialblock (14) durch Ausdehnen der Schaumstoffe in dem Hohlraum zu bilden,
• Verschieben der Teile in die entfernte Konfiguration und Ausformen der erhaltenen Polsterung, wobei die Polsterung den mittleren Bereich, der von dem Block umspritzt ist, und den seitlichen Bereich aufweist, der nicht von dem Block umspritzt ist,
wobei das Verfahren **dadurch gekennzeichnet ist, dass** die Lamelle vor dem Injizieren der Gemische von einem flexiblen Verstärkungsband (15) umgeben wird, das dazu bestimmt ist, durch den Block umspritzt zu werden, um den Block gegen die Gefahr eines Reißens in einer Fuge (16) zu verstärken, die durch die Lamelle in dem Block nach dem Formen definiert wird.

2. Verfahren nach Anspruch 1, **dadurch gekennzeichnet, dass** die Lamelle (9) entsprechend einer Abmessung in den Hohlraum (5) hervorsteht, die zwischen 20 und 50 mm liegt.

3. Verfahren nach einem der Ansprüche 1 oder 2, **dadurch gekennzeichnet, dass** das Band (15) auf Grundlage eines porösen faserigen Werkstoffes aus Schaumstoff ist, der insbesondere auf Grundlage von Vlies ist.

4. Verfahren nach einem der Ansprüche 1 bis 3, **dadurch gekennzeichnet, dass** sich die Verkleidung (2) ohne Unterbrechung zwischen dem mittleren Bereich (10) und dem seitlichen Bereich (11) des Überzugs erstreckt.

5. Verfahren nach einem der Ansprüche 1 bis 3, **dadurch gekennzeichnet, dass** der mittlere Bereich (10) und der seitliche Bereich (11) des Überzugs durch eine Naht (17) miteinander verbunden sind, die einen Absatz (18) definiert, der ins Innere des Überzugs gedreht ist, wobei sich der Absatz mit einer seiner Seiten, sobald die Klemmung des Überzugs erfolgt ist, an der Lamelle (9) anlegt.

6. Verfahren nach einem der Ansprüche 1 bis 5, **dadurch gekennzeichnet, dass** es einen zusätzlichen Schritt, der zwischen dem Klemmen des Überzugs und dem Injizieren der Schaumstoff-Vorläufergemische (12, 13) ausgeführt wird, zum Anbringen einer dichten thermoplastischen Folie auf Höhe des mittleren Bereiches (10) und des Spaltes (8) umfasst, wobei die Folie angeordnet ist, um sich im Laufe der Ausdehnung in Kontakt mit den Schaumstoffen abzubauen, um ein Umspritzen des mittleren Bereichs durch den Block (14) zu ermöglichen und dabei im Wesentlichen das Eindringen von Schaumstoff in die Schichtdicke der Verkleidung (2) und das Austreten von Schaumstoff im Bereich des Spaltes zu verhindern.

7. Polsterung (1), die durch ein Verfahren nach einem der Ansprüche 1 bis 6 hergestellt wird, wobei das Verfahren die folgenden Schritte umfasst:
• Vorsehen eines flexiblen Verkleidungsüberzugs (2),
• Vorsehen einer Form, die eine erste und eine zweite (4) Unterbaugruppe umfasst, die zum Verschließen betätigbar sind, um einen Formhohlraum (5) zu definieren, wobei die Form die folgenden Eigenschaften aufweist:
o die erste Unterbaugruppe umfasst ein erstes (6) und ein zweites (7) Element, die teilweise die Wand des Hohlraumes definieren,
∘ die Elemente können aus einer angenäherten Konfiguration heraus, in der sie durch einen Spalt (8) voneinander getrennt sind, der ein Einklemmen des Überzugs ermöglicht, in eine entfernte Konfiguration voneinander entfernt werden, in der sie durch den verbreiterten Spalt voneinander getrennt sind, der ein Durchführen des Überzugs ermöglicht,
∘ das zweite Element ist mit einer Lamelle (9) versehen, die sich entlang des Spaltes erstreckt, und derart in den Hohlraum hervorsteht, um diesen teilweise zu unterteilen,
• wenn die Elemente in der entfernten Konfiguration sind, Durchführen des Überzugs durch den verbreiterten Spalt, sodass der Überzug einen mittleren Bereich (10), der in dem Hohlraum auf Höhe des ersten Elements angeordnet ist, und einen seitlichen Bereich (11) aufweist, der aus dem Hohlraum hervorsteht,
• Betätigen der Elemente in deren angenäherte Konfiguration, um den Überzug zwischen den Bereichen einzuklemmen,
• Injizieren eines ersten Schaumstoff-Vorläufergemisches (12) aus elastisch verdichtbarem Polyurethan in den mittleren Bereich, und eines zweiten Schaumstoff-Vorläufergemisches (13) aus elastisch verdichtbarem Polyurethan in den Hohlraumwandteil, der von dem zweiten Element definiert wird, wobei das erste Gemisch zu einem Schaumstoff mit geringerem Verdichtungswiderstand führt, als das zweite Gemisch, um einen Füllmaterialblock (14) durch Ausdehnen der Schaumstoffe in dem Hohlraum zu bilden,
• Verschieben der Teile in die entfernte Konfiguration und Ausformen der erhaltenen Polsterung, wobei die Polsterung den mittleren Bereich, der von dem Block umspritzt ist, und den seitlichen Bereich aufweist, der nicht von dem Block umspritzt ist,
wobei die Polsterung umfasst:
• einen Füllmaterialblock (14) auf Grundlage von elastisch verdichtbarem Schaumstoff,
• einen Verkleidungsüberzug (2) des Blocks, wobei der Überzug den mittleren Bereich (10) und den seitlichen Bereich (11) aufweist, wobei der Schaumstoff (12), der den mittleren Bereich umspritzt, einen geringeren Verdichtungswiderstand als jener des Schaumstoffes (13) aufweist, der sich auf Höhe des seitlichen Bereiches erstreckt, wobei der Block eine Fuge (16) aufweist, die an der Schnittstelle zwischen den Schaumstoffen angeordnet ist,
• ein flexibles Verstärkungsband (15), insbesondere auf Grundlage von Vlies, das in der Fuge von dem Block umspritzt wird,
wobei die Polsterung **dadurch gekennzeichnet ist, dass** der mittlere Bereich von dem Block umspritzt ist, und der seitliche Bereich nicht von dem Block umspritzt ist, und dadurch, dass die Lamelle vor dem Injizieren der Gemische von einem flexiblen Verstärkungsband (15) umgeben wird, das dazu bestimmt ist, von dem Block umspritzt zu werden, um den Block gegen die Gefahr eines Reißens in der Fuge (16), die durch die Lamelle in dem Block nach dem Formen definiert wird, zu verstärken.

8. Kraftfahrzeugsitz, der eine Polsterung (1) nach Anspruch 7 umfasst, wobei die Polsterung auf einem Gestell des Sitzes montiert ist, wobei der seitliche Überzugsbereich (11) mit Mitteln zum umfänglichen Einhängen (19) in das Gestell versehen ist, um an dem Füllmaterialblock (14) verspannt zu werden.

## Claims

1. Method for manufacturing a cushion (1) of a motor vehicle seat, said method comprising the following steps:
• providing a flexible cladding cover (2),
• providing a mould comprising a first and a second (4) subassembly actuatable for closing so as to define a moulding cavity (5), said mould having the following features:
∘ said first subassembly comprises a first (6) and a second (7) element partly defining the wall of said cavity,
∘ said elements can be separated from each other from a close-together configuration in which they are separated from each other by a slot (8), allowing a gripping of said cover, to a separated configuration, in which they are separated from each other by said broadened slot, enabling said cover to pass,
∘ said second element is provided with a strip (9) extending along said slot and projecting into said cavity so as to partially compartmentalise it,
• said elements being in separated configuration, passing said cover through said broadened slot, so that said cover has a middle zone (10), disposed in said cavity facing said first element, and a lateral zone (11) projecting from said cavity,
• actuating said elements to their close-together configuration so as to grip said cover between said zones,
• injecting a first elastically compressible polyurethane-foam precursor mixture (12) onto said middle zone and a second elastically compressible polyurethane-foam precursor mixture (13) onto the cavity-wall part defined by said second element, said first mixture leading to a foam of less compressive strength than said second mixture, so as to form a stuffing block (14) by expansion of said foams in said cavity,
• moving said parts into a separated configuration and removing said cushion obtained from the mould, said cushion having said middle zone moulded onto by said block and said lateral zone not moulded onto by said block,
said method being **characterised in that**, prior to the injection of said mixtures, said strip is surrounded by a flexible reinforcing band (15) intended to have said block moulded onto it, in order to reinforce said block faced with the risk of tearing in a trench (16) defined by said strip in said block once moulded.

2. Method according to claim 1, **characterised in that** the strip (9) projects in the cavity (5) over a dimension of between 20 and 50 mm.

3. Method according to one of claims 1 or 2, **characterised in that** the band (15) is based on fibrous material porous to the foam, being in particular based on a nonwoven material.

4. Method according to any one of claims 1 to 3, **characterised in that** the cladding (2) extends without discontinuity between the middle zone (10) and the lateral zone (11) of the cover.

5. Method according to any one of claims 1 to 3, **characterised in that** the middle zone (10) and the lateral zone (11) of the cover are connected together by a stitching (17) defining a heel (18) turned towards the inside of said cover, said heel bearing on the strip (9) by one of its faces once the gripping of said cover has been implemented.

6. Method according to any one of claims 1 to 5, **characterised in that** it comprises an additional step, performed between the gripping of the cover and the injection of the foam-precursor mixtures (12, 13), of fitting an impervious thermoplastic film facing the middle zone (10) and facing the slot (8), said film being arranged to degrade in contact with said foams during expansion, so as to allow an overmoulding of said middle zone by the block (14) while substantially preventing the penetration of foam into the thickness of the cladding (2) and leakages of foam at said slot.

7. Cushion (1) produced by a method according to any one of claims 1 to 6, said method comprising the following steps:
• providing a flexible cladding cover (2),
• providing a mould comprising a first and a second (4) subassembly actuatable for closing so as to define a moulding cavity (5), said mould having the following features:
∘ said first subassembly comprises a first (6) and a second (7) element partly defining the wall of said cavity,
∘ said elements can be separated from each other from a close-together configuration in which they are separated from each other by a slot (8), allowing a gripping of said cover, to a separated configuration, in which they are separated from each other by said broadened slot, enabling said cover to pass,
∘ said second element is provided with a strip (9) extending along said slot and projecting into said cavity so as to partially compartmentalise it,
• said elements being in separated configuration, passing said cover through said broadened slot, so that said cover has a middle zone (10), disposed in said cavity facing said first element, and a lateral zone (11) projecting from said cavity,
• actuating said elements to their close-together configuration so as to grip said cover between said zones,
• injecting a first elastically compressible polyurethane-foam precursor mixture (12) onto said middle zone and a second elastically compressible polyurethane-foam precursor mixture (13) onto the cavity-wall part defined by said second element, said first mixture leading to a foam of less compressive strength than said second mixture, so as to form a stuffing block (14) by expansion of said foams in said cavity,
• moving said parts into a separated configuration and removing said cushion obtained from the mould, said cushion having said middle zone moulded onto by said block and said lateral zone not moulded onto by said block,
said cushion comprising:
• a stuffing block (14) based on elastically compressible foam,
• a cover (2) for cladding said block, said cover having the middle zone (10) and the lateral zone (11), the foam (12) moulded onto said middle zone having a compressive strength less than that of the foam (13) extending facing said lateral zone, said block having a trench (16) disposed at the interface between said foams,
• a flexible reinforcing band (15), in particular based on nonwoven material, with said block moulded onto it in said trench,
said cushion being **characterised in that** said middle zone has said block moulded on to it and said lateral zone does not have said block moulded onto it, and **in that**, prior to the injection of said mixtures, said strip is surrounded by a flexible reinforcing band (15) intended to have said block moulded onto it, in order to reinforce said block faced with the risk of tearing in the trench (16) defined by said strip in said block once moulded.

8. Motor-vehicle seat comprising cushion (1) according to claim 7, said cushion being mounted on a frame of said seat, the lateral zone (11) of the cover being provided with means (19) for peripheral attachment to said frame so as to be tensioned against the stuffing block (14).
